# EUROPÄISCHE PATENTSCHRIFT

(11) **EP 2 788 122 B1**
(45) Veröffentlichungstag und Bekanntmachung des Hinweises auf die Patenterteilung: **16.08.2017**
(21) Anmeldenummer: 12806389.8
(22) Anmeldetag: 07.12.2012
(51) Int. Cl.: B04B 5/04

(54) **VERSCHLIEßBARER ZENTRIFUGENBEHÄLTER**
CLOSABLE CENTRIFUGE CONTAINER
CENTRIFUGEUSE POUVANT ÊTRE FERMÉE

(30) Priorität: 08.12.2011 DE 102011056164
(43) Veröffentlichungstag der Anmeldung: 15.10.2014
(73) Patentinhaber: Andreas Hettich GmbH & Co. KG, 78532 Tuttlingen (DE)
(72) Erfinder: HÖLDERLE, Andreas, 78199 Döggingen (Bräunlingen) (DE)
(74) Vertreter: Puschmann Borchert Bardehle Patentanwälte Partnerschaft mbB
(86) Internationale Anmeldenummer: PCT/EP2012/074845
(87) Internationale Veröffentlichungsnummer: WO 2013/083805

(56) Entgegenhaltungen:
- EP-A1- 1 059 239
- CA-A1- 1 008 015
- DE-A1- 10 128 539
- DE-A1-102011 100 209
- DE-B4-102008 031 502
- DE-U1- 20 110 247

## Beschreibung

Die Erfindung betrifft einen verschließbaren Zentrifugenbehälter gemäß der im Oberbegriff des Anspruchs 1 angegebenen Art.

Für Zentrifugenbecher ist es vorteilhaft, wenn diese verschließbar sind, da bei der Handhabung oder bei der Zentrifugation das Zentrifugiergut leicht aus einem offenen Zentrifugenbehälter entweichen kann. Durch einen insbesondere aerosoldichten Verschluss eines Zentrifugenbehälters kann eine Kontamination der Umgebung beim Bruch eines in dem Zentrifugenbehälter eingesetzten Behältnisses verhindert werden. Zudem kann auch eine Verunreinigung von empfindlichem Zentrifugiergut verhindert werden.

Im Stand der Technik sind Zentrifugenbehälter bekannt, welche einen über einen Hebel verschließbaren Deckel aufweisen.

So offenbart beispielsweise die DE 10 2008 031 502 B4 einen Zentrifugenbecher mit einem verschließbaren Deckel, der über einen am Deckel angebrachten Hebel mit einem Zentrifugenbecher verschließbar ist. Dabei weist die Spannkraft neben einer vertikalen Kraftkomponente auch eine horizontale Kraftkomponente auf. Dies sorgt für verbesserte Schließeigenschaften des Deckels. Ein Verschieben des Deckels während der Zentrifugation wird dadurch ausgeschlossen.

Es ist Aufgabe der Erfindung, einen Zentrifugenbehälter mit einem verschließbaren Deckel anzugeben, der in einer besonders einfachen Weise handzuhaben ist.

In bekannter Weise umfasst ein verschließbarer Zentrifugenbehälter einen Zentrifugenbecher, einen Deckel der mit einem Verschlusshebel ausgestattet ist. Der Deckel ist durch eine Schwenkbewegung des Verschlusshebels mit dem Zentrifugenbecher verschließbar. Dafür sind korrespondierende Verbindungsmittel vorgesehen, die mittels des Verschlusshebels in Eingriff gebracht werden können. Die Aufgabe wird durch die kennzeichnenden Merkmale des Anspruchs 1 in Verbindung mit seinen Oberbegriffsmerkmalen gelöst.

Erfindungsgemäß ist vorgesehen, dass der Verschlusshebel als Tragegriff ausgebildet ist und der Tragegriff an wenigstens einer am Zentrifugenbecher angeformten Tragegriffaufnahme schwenkbar befestigbar ist. Ferner ist der Tragegriff derart angeordnet, dass er in Verschlossenstellung das Tragen des Zentrifugenbechers am Tragegriff ermöglicht. Diese Position wird in der folgenden Beschreibung auch als vertikal verstanden.

Insbesondere sind die Tragegriffaufnahmen am oberen Zentrifugenbecherrand angeordnet, wobei der Tragegriff in Offenstellung am Zentrifugenbecherrand anliegt und in Trageposition im Wesentlichen normal zur Öffnungsfläche des Zentrifugenbechers liegt. Indem der Deckel aufgrund unterschiedlicher Hebelstellungen verriegelbar ist, ist eine Handhabung mit nur einer Hand möglich.

Diese Ausgestaltung eines Zentrifugenbehälters hat den Vorteil, dass durch die synergetische Verwendung des Verschlusshebels als Tragegriff der Zentrifugenbehälter auf einfache Weise verschlossen, geöffnet und transportiert werden kann.

Gemäß einem Aspekt kann der Verschlusshebel derart gelagert sein, dass der Verschlusshebel an einer am Zentrifugenbecher angebrachten Aufnahme gelagert ist, wobei der Verschlusshebel mit einer Führungsbahn versehen ist, welche mit an dem Deckel vorgesehenen Führungselementen korrespondiert, wobei eine Verschwenkung des Verschlusshebels zu einer Festlegung des Deckels am Behälter führt. Durch den Eingriff des Führungselements in die Führungsbahn wird eine Spannkraft auf den Deckel erzeugt, die diesen gegen den Behälter drückt.

Dadurch kann der Verschlusshebel das Tragen des Behälters ohne Deckel ermöglichen, wobei der Deckel dennoch über den Verschlusshebel arretierbar ist.

In einer besonders vorteilhaften Ausgestaltung sind die korrespondierenden Verbindungsmittel und der Tragegriff derart ausgestaltet, dass der Tragegriff von einer Offenstellung in eine erste Verschlossenstellung, die der Tragestellung entspricht, verstellbar ist. Der Tragegriff kann über die Tragestellung hinaus in eine zweite Verschlossenstellung verschwenkbar ausgebildet sein. In der zweiten Verschlossenstellung liegt der Tragegriff vorzugsweise wieder am Zentrifugenbecherrand an. Dadurch wird eine sehr kompakte Form erreicht, wodurch die Zentrifugationseigenschaften des Bechers verbessert werden.

Gemäß einer vorteilhaften Ausgestaltung der Erfindung sind an dem Zentrifugenbecher zwei gegenüberliegende Tragegriffaufnahmen vorgesehen, die mit je einem Ende eines Tragegriffs schwenkbar verbindbar sind. Eine zweiseitige Aufhängung des Tragegriffs hat den Vorteil, dass die Stabilität und die mögliche Gewichtsbelastung des Zentrifugenbehälters gegenüber einer einarmigen Aufhängung erhöht sind. Da vorzugsweise ein Verriegelungsmechanismus im Bereich der Aufhängung integriert ist, hat die zweiseitige, insbesondere symmetrische Aufhängung eine gleichmäßige Kraftverteilung zur Folge.

In einer weiteren vorteilhaften Ausgestaltung ist die Lagerung des Tragegriffs lösbar an der Aufnahme am Behälter angeordnet. Bei einer solchen lösbaren Anordnung, kann eine Verlustsicherung vorgesehen sein, die einen Verlust des Tragegriffs verhindert, wenn kein Deckel auf den Behälter aufgesetzt ist.

Diese Verlustsicherung kann so gestaltet sein, dass Ausnehmungen in den Behälterrand eingebracht sind. Diese Ausnehmungen sind so mit dem Tragegriff abgestimmt, dass der Tragegriff in vertikaler Lage derart in die Ausnehmung eingreift, dass dieser in einer waagerechten Bewegungsrichtung festgelegt ist, jedoch bei einer waagerechten Lage in seiner waagerechte Bewegungsrichtung frei ist.

So kann beispielsweise eine Verbindung von Tragegriff mit einer Aufnahme am Zentrifugenbehälter so gestaltet sein, dass im Randbereich des Tragegriffs ein Dorn nach außen angeformt ist, der in eine lochförmige Ausnehmung in der Aufnahme am Behälter eingreift. Der Tragegriff ist dann mit der Aufnahme des Behälters über eine waagrechte Einsteckbewegung verbindbar.

Durch Unterbinden der waagrechten Beweglichkeit durch einen, zwischen zwei Anschlussbereichen liegenden Deckel, einerseits und einer Ausnehmung in die der Tragegriff in einer Vertikalstellung während des Tragens eingreift andererseits, kann der Tragegriff dauerhaft gegen unbeabsichtigtes Lösen gesichert sein. Ein bedarfsgemäßes Entfernen des Tragegriffs ist hingegen in einer waagrechten Position ohne Deckel möglich.

Erfindungsgemäß sind die Verbindungsmittel derart ausgestaltet, dass der Deckel Verbindungsmittel, insbesondere in Form von bolzenförmigen Anformungen aufweist. Diese Anformungen sind in zentrifugenbehälterseitigen Ausnehmungen eines Verriegelungsmechanismus durch die Schwenkbewegungen des Tragegriffs arretierbar.

Die zentrifugenbehälterseitigen Ausnehmungen können direkt in den Tragegriff, der an dem Zentrifugenbehälter befestigbar ist, eingebracht sein. Dies hat den Vorteil, dass der Schwenkhebel, respektive Tragegriff, als Arretiermittel direkt verwendbar ist.

Vorzugsweise ist die Ausnehmung insbesondere im Tragegriff als Führungsbahn ausgebildet, in der ein am Deckel angeformtes Verbindungsmittel, insbesondere Bolzen oder Zapfen während der Bewegung des Tragegriffs geführt und sukzessive arretiert wird. Durch das Zusammenwirken von Führungsbahn und Zapfen wird eine Spannkraft auf den Deckel ausgeübt.

Die in dem Tragegriff eingebrachte Führungsbahn kann in der Offenstellung, also in waagerechter Lage, eine Ausnehmung auf, die in vertikaler Richtung offen ist. Im Anschluss an die vertikal eingebrachte Öffnung ist ein im Wesentlichen um die Drehachse radial verlaufender Gang, der sich entgegen der Drehrichtung um den Drehpunkt erstreckt, in den Tragegriff eingebracht.

Auf diese Weise kann durch Bewegung des Tragegriffs, der mit dem Zapfen des Deckels in Eingriff gebracht ist, der Deckel besonders leicht mit dem Zentrifugenbecher verschlossen werden.

Vorzugsweise können in die Führungsbahn Rastmittel eingebracht sein, durch welche der Tragegriff wenigstens in einer Trageposition vorübergehend verrastbar ist.

In einer besonders vorteilhaften Ausgestaltung ist die Tragegriffaufnahme für den Tragegriff außen am Zentrifugenbecher angeordnet. Dies bedeutet, dass der Tragegriff von innen in die Tragegriffaufnahmen eingesetzt wird, was zur Folge hat, dass die korrespondierenden Aufnahmemittel während der Zentrifugation des Zentrifugenbehälters ineinander gedrückt werden. An der Seite des Tragegriffs, die in Richtung des Behälterraums gerichtet ist, kann die Führungsbahn in den Tragegriff eingebracht sein. In diese werden die Führungszapfen des Deckels aufgenommen.

Durch Verschwenken des Tragegriffs wird der Deckel aufgrund seiner Führungsbahn in dem Tragegriff vertikal nach unten bewegt und dadurch mit dem Zentrifugenbehälter verspannt. Bei einem Verschwenken des Tragegriffs von seiner horizontalen in die vertikale Trageposition wird der Deckel bereits festgelegt.

Bei einem weiteren Verschwenken um 90°, also wieder in eine waagrechte Position, wird der Führungszapfen am Deckel derart im Tragegriff weitergeführt, dass dieser seine vertikale Position gegenüber dem Behälter nicht weiter verändert. Mit einem solchen in eine waagerechte Position verbrachten Tragegriff ist die Zentrifugation auf deutlich vereinfachte Weise möglich.

Die Ausgestaltung, dass der Tragegriff im eingebauten Zustand am radial außenliegenden Ende Aufnahmemittel für die Aufnahme in der am Zentrifugenbecher angeformten Traggriffaufnahme aufweist und am radial innen liegenden Ende Verbindungsmittel zur Verbindung mit dem Deckel aufweist, hat den Vorteil, dass der Tragegriff mit dem Zentrifugenbecher verbunden werden kann, ohne dass zwingend ein Deckel eingesetzt werden muss, um den Zentrifugenbehälter mit dem Tragegriff zu transportieren.

Durch die schneckenhausartig ausgestaltete Führungsbahn ist gewährleistet, dass der Zentrifugenbehälter mit nur einer Hand verwendet werden kann. Durch Verschwenken des Tragegriffs kann der Behälter geöffnet, verschlossen oder transportiert werden. Dies vereinfacht das Handling eines Zentrifugenbehälters ungemein.

Insbesondere ist der Zentrifugenbehälter bei geschlossenem Deckel aerosoldicht verschlossen.

Auch das Einsetzen des Zentrifugenbehälters in die Zentrifuge wird durch die Verwendung des Tragegriffs deutlich erleichtert. Dies ist auch für die Entnahme zutreffend. In einer besonders vorteilhaften Ausführungsform ist der Tragegriff an zwei gegenüberliegenden Tragegriffaufnahmen befestigt. Die Tragegriffaufnahmen sind gegenüberliegend am Rand des Zentrifugenbechers angeordnet, was eine gleichmäßige Verteilung der Spannkraft auf die Dichtung gewährleistet. In einer besonders vorteilhaften Ausführungsform sind die Verbindungsmittel mit dem Deckel, also auch die Anschlussmittel zum Anschluss des Tragegriffs an den Zentrifugenbecher, modular austauschbar. Dadurch ist gewährleistet, dass ein Tragegriff sowohl an unterschiedliche Zentrifugenbecher als auch an unterschiedliche Deckel angepasst werden kann.

Der Zentrifugenbehälter kann einen vieleckigen oder runden Querschnitt aufweisen. Insbesondere ist der Deckel mit einer Dichtung versehen, die eine aerosoldichte Abdichtung zuverlässig gewährleisten kann.

Ferner kann eine Einheit aus Anschlussmittel und Verbindungsmittel vorgesehen sein, die lösbar mit einem Tragegriff verbindbar sein kann.

Vorzugsweise ist der Deckel lösbar mit dem Zentrifugenbecher verbunden, wodurch eine Verwendung des Zentrifugenbechers auch ohne Deckel gewährleistet wird.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: ein erfindungsgemäßer Zentrifugenbehälter mit Tragegriff und aufgesetztem Deckel;
- Fig. 2: ein erfindungsgemäßer Deckel;
- Fig. 3: ein erfindungsgemäßer Zentrifugenbehälter mit eingebautem Tragegriff;
- Fig. 4: ein Tragegriff mit eingebrachter Führungsbahn zur Aufnahme eines Deckelzapfens;
- Fig. 5: ein Zentrifugenbehälter in Draufsicht;
- Fig. 6: eine Detaildarstellung der Tragegriffaufnahme im ungesicherten Zustand, und
- Fig. 7: eine Detaildarstellung der Tragegriffaufnahme im gesicherten Zustand.

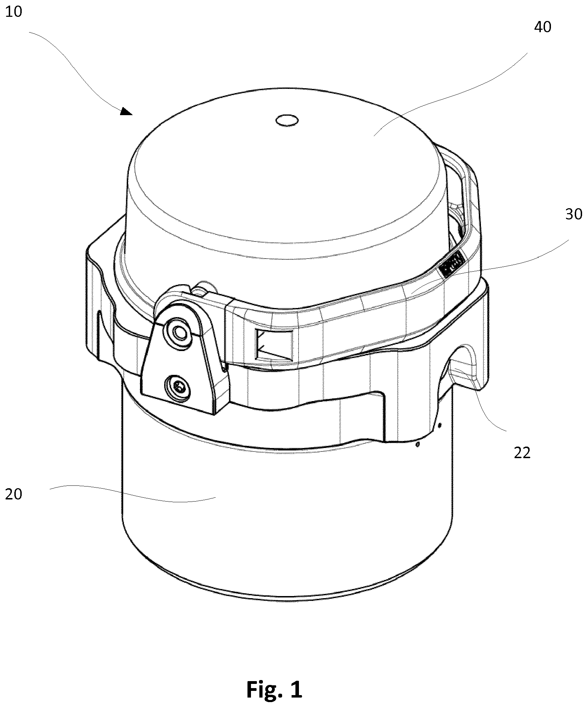

Fig. 1 zeigt einen verschließbaren Zentrifugenbehälter 10, der einen Zentrifugenbecher 20, einen Tragegriff 30 und einen Deckel 40 umfasst. Der Zentrifugenbecher 20 ist als Schwenkbecher vorgesehen und weist entsprechende Schwenkaufnahmen 22 auf. Sofern der Deckel 40 auf den Zentrifugenbecher 20 aufgesetzt ist, kann dieser durch Verschwenken des Tragegriffs 30 in eine vertikale Trageposition mit dem Zentrifugenbecher 20 verbunden werden. Dadurch ist der Zentrifugenbecher 20 und somit der Zentrifugenbehälter 10 verschlossen.

Die Funktionsweise des Verschlussmechanismus wird in den folgenden Figuren näher erläutert.

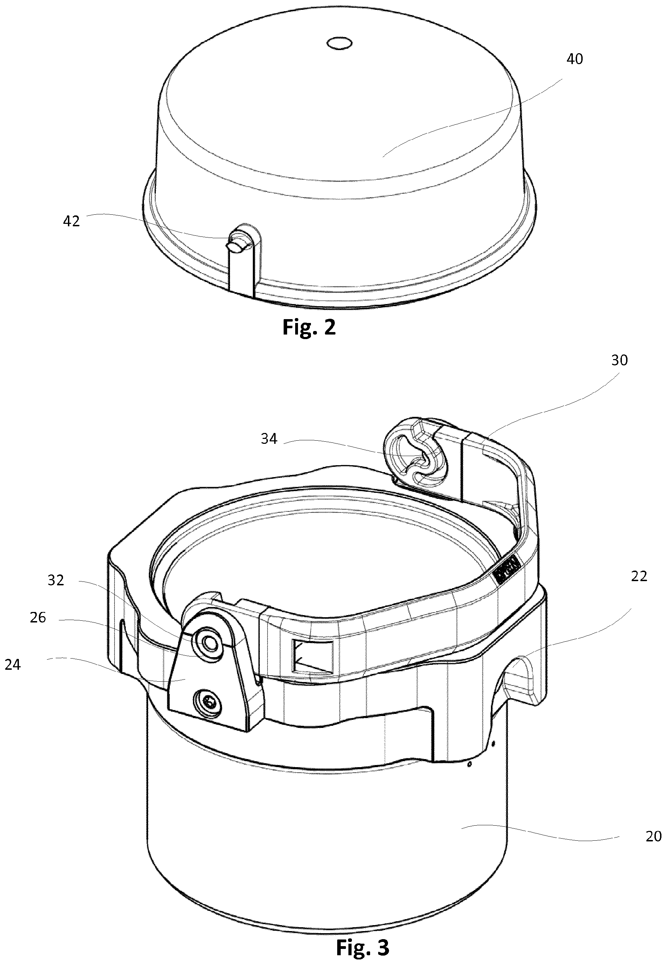

Fig. 2 zeigt einen Deckel 40 für einen verschließbaren Zentrifugenbehälter 10, der auf den Zentrifugenbecher 20 aufsetzbar ist. Der Deckel 40 weist dabei Verschlussmittel auf, die in Form von Zapfen 42, die an den Deckel 40 angeformt sind, ausgebildet sind. Diese Zapfen 42 können mit einer an den Tragegriff 30 angeformten Führungsbahn 34 in Eingriff gebracht werden.

Fig. 3 zeigt eine perspektivische Ansicht eines Zentrifugenbechers 20 mit seinem Tragegriff 30 ohne den aufgesetzten Deckel. Der Zentrifugenbecher 20 weist eine Tragegriffaufnahme 24 auf, die mit einer Ausnehmung 26 versehen ist. In diese Ausnehmung 26 ist ein an dem Tragegriff angeformter Verbindungszapfen aufnehmbar. Auf diese einfache Weise kann der Tragegriff 30 mit dem Zentrifugenbecher 20 verbunden werden. Der Tragegriff 30 ist hier in einer Offenstellung gezeigt, wobei ersichtlich ist, dass die Führungsbahn 34, die in das Griffende eingebracht ist, eine in Offenstellung nach oben gerichtete Öffnung aufweist, in welche die Zapfen 42 des Deckels 40 eingebracht werden können. Nach eingesetztem Deckel 40 und bei Verschwenken des Tragegriffs 30, werden die Zapfen 42 derart in der Führungsbahn 34 geführt, dass diese entlang der Becherachse nach unten gedrückt werden, wodurch eine Anpresskraft auf den Deckel 40 ausgeübt wird. Durch die Anpresskraft wird der Zentrifugenbecher 20 mit dem Deckel 40 verriegelt. Auf diese Weise kann der Zentrifugenbehälter 10 im geschlossenen Zustand getragen werden. Um den Deckel 40 wieder zu öffnen, muss lediglich der Tragegriff 30 wieder um 90 ° in seine horizontale Lage verschwenkt werden. Dies ist mit einem Handgriff möglich. So ist eine sehr einfache Handhabung des Zentrifugenbehälters 10 gewährleistet.

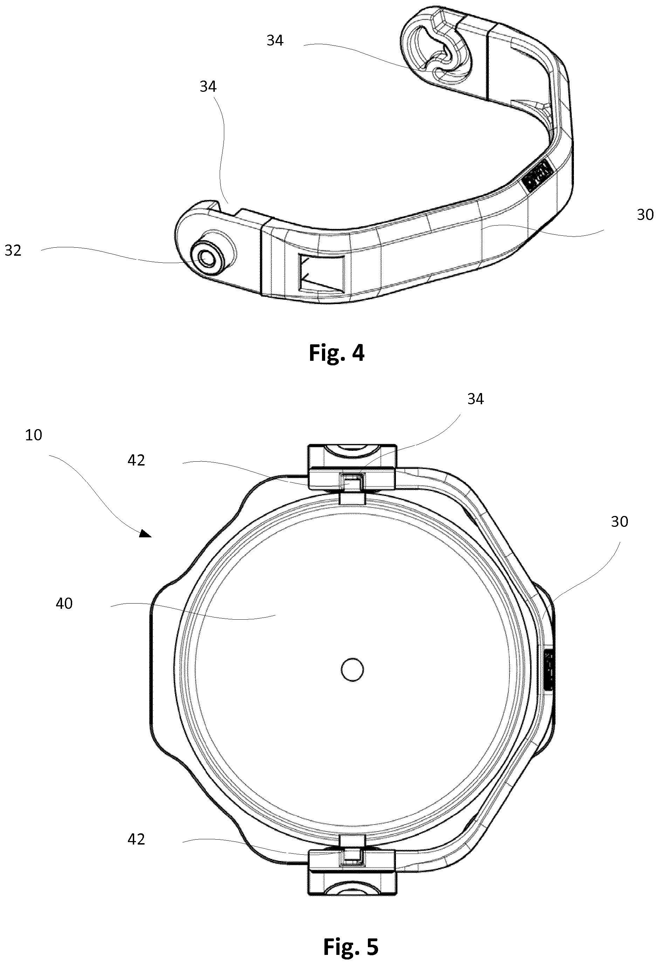

Fig. 4 zeigt eine perspektivische Darstellung des Tragegriffs 30. In dieser Darstellung ist die zapfenförmige Anformung 32 deutlich erkennbar. Durch diese ist der Tragegriff 30 in der Ausnehmung 26 der Tragegriffaufnahme 24 des Behälters 20 aufgenommen. Gleichermaßen ist eine Gestaltung denkbar, bei welcher die Tragegriffaufnahme als Zapfen ausbildet ist, und der Tragegriff eine ringförmige Ausnehmung aufweist. Die Ausbildung als Zapfen 32 sorgt für eine einfache Ausgestaltung einer drehbaren Verbindung zwischen Zentrifugenbecher 20 und Tragegriff 30. Deutlich wird auch die in den Tragegriff 30 eingebrachte Führungsbahn 34, die derart verläuft, dass der Tragegriff 30 in Offenstellung die Zapfen 42 aufnehmen kann, wobei diese entlang der Führungsbahn 34 bei Verschwenken in die vertikale Trageposition derart geführt werden, dass der Zentrifugenbehälter 10 durch den Deckel 40 verschlossen wird.

Ferner ist dieser Darstellung zu entnehmen, dass die Führungsbahn im weiteren Verlauf derart gestaltet ist, dass sie bei Verschwenken um weitere 90° die Anspresskraft, die bei einer vertikalen Ausrichtung des Tragegriffs 30 auf den Deckel aufgebracht wird und den Deckel 40 verschlossen hält, diesen auch in einer weiteren horizontalen Lage verschlossen hält. Die Verschlossenstellung liegt dann im Winkel von 180° zur Offenstellung.

Durch diese horizontale am Zentrifugenbecher 20 anliegende Verschlossenstellung kann der Zentrifugenbehälter 10 sehr gut im verschlossenen Zustand zentrifugiert werden. Der Behälter kann somit auf einfache Weise mit einer Hand von einer verschlossenen Zentrifugierstellung in die vertikale Trageposition verschwenkt werden. Durch diese Tragemöglichkeit wird auch die Entnahme des Zentrifugenbehälters 10 aus einer Zentrifuge erleichtert. Der Öffnungsvorgang wurde in den vorangehenden Figuren bereits beschrieben.

Vorzugsweise kann die Führungsbahn derart gestaltet sein, dass sie insbesondere in der Trageposition eine Raststelle im Verschwenkbereich aufweist.

Fig. 5 zeigt einen erfindungsgemäßen Zentrifugenbehälter 10, wobei der Deckel 40 bei der Offenstellung des Tragegriffs 30 auf den Zentrifugenbecher 20 aufgesetzt ist. Hier ist gut zu erkennen, wie die Verschlusszapfen 42 des Deckels 40 in die Führungsbahn 34 des Tragegriffs 30 eingesetzt sind, wobei die Führungskraft eines nach oben gerichtete Öffnung aufweist.

Durch die erfindungsgemäße Ausgestaltung ist somit ein sehr einfach handzuhabender Zentrifugenbehälter 10 gegeben, der ein einfaches Verschließen und Öffnen des Zentrifugenbechers mit einem Deckel 40 gewährleistet.

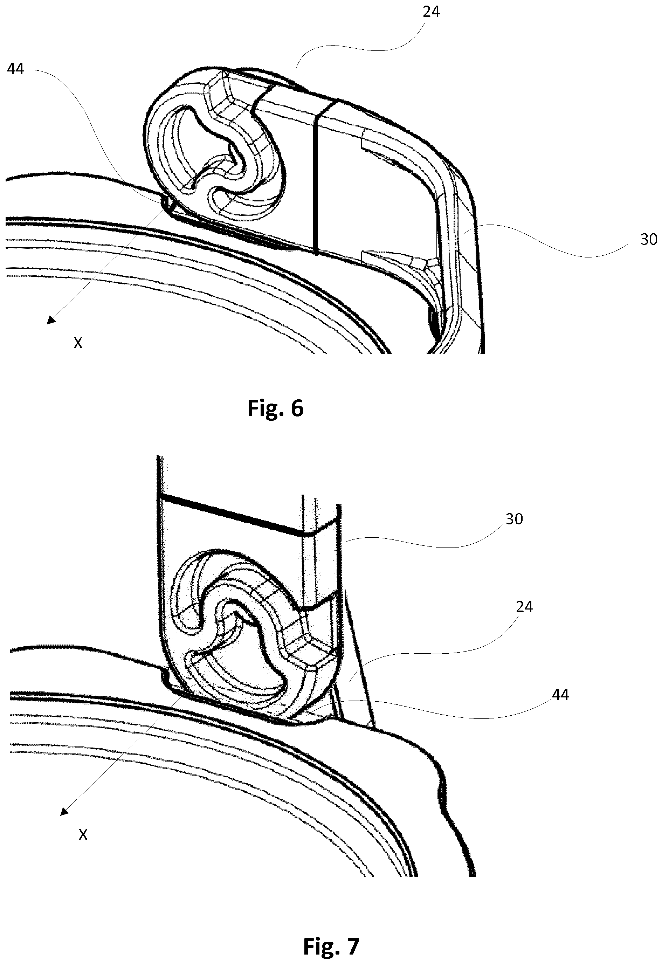

Fig. 6 zeigt einen Ausschnitt des Behälters 10 im Bereich der Tragegriffaufnahme 24. An der Tragegriffaufnahme 24 ist ein Tragegriff 30 gelagert. Im Bereich des Schwenkpunkts des Tragegriffs 30 ist eine Ausnehmung 44 in den Behälterrand eingebracht.

In der in Fig. 6 dargestellten, waagerechten Position des Tragegriffs 30 greift dieser nicht in die Ausnehmung 44 ein. Der Tragegriff ist durch eine Bewegung in X-Richtung von der Tragegriffaufnahme 24 zu lösen, indem die zapfenförmige Anformung 32, wie in Fig. 4 dargestellt ist, aus einem ringförmigen Lager entfernt wird. Dies ist in der in Fig. 6 dargestellten Position möglich.

Fig. 7 zeigt denselben Ausschnitt wie in Fig. 6, wobei hier der Tragegriff 30 in einer vertikalen Position dargestellt ist. Zu sehen ist in dieser Position, dass der Tragegriff 30 mit seinem, dem Behälter zugewandten Ende in die Ausnehmung 44 eingreift. Eine Bewegung und damit ein Lösen des Tragegriffs 30 aus der Behälteraufnahme 24 ist nicht möglich, da die Bewegung in X-Richtung durch die Ausnehmung 44 blockiert ist. Auf diese Weise ist eine Verlustsicherung des Tragegriffs 30 während des Tragens des Behälters gewährleistet.

### Bezugszeichenliste

- 10: Zentrifugenbehälter
- 20: Zentrifugen becher
- 22: Schwenkaufnahme
- 24: Tragegriffaufnahme
- 26: Ausnehmung
- 30: Tragegriff
- 32: zapfenförmige Anformung
- 34: Führungsbahn
- 40: Deckel
- 42: Zapfen
- 44: Ausnehmung

## Patentansprüche

1. Zentrifugenbehälter (10) umfassend einen Zentrifugenbecher (20), einen Verschlusshebel (30) und einen Deckel (40), der an dem Zentrifugenbecher (20) festlagbar ist und der Verschlusshebel (30) wenigstens von einer Offenstellung in eine Verschlossenstellung verschwenkbar ist, und dass der Deckel (40) und Zentrifugenbehälter (10) über korrespondierende Verbindungsmittel (42) durch den Verschlusshebel (30) derart in Eingriff gebracht werden können, dass der Deckel (40) in Verschlossenstellung arretiert ist und in Offenstellung freigegeben ist, **dadurch gekennzeichnet, dass** der Verschlusshebel als Tragegriff (30) ausgebildet ist, und der Tragegriff (30) an wenigstens einer am Zentrifugenbecher (20) angeformten Tragegriffaufnahme (24) schwenkbar befestigbar ist, und ferner der Tragegriff (30) in Verschlossenstellung das Tragen des Zentrifugenbehälters (10) am Tragegriff (30) ermöglicht.

2. Zentrifugenbehälter nach Anspruch 1, **dadurch gekennzeichnet, dass** der Tragegriff (30) an der am Zentrifugenbecher (20) angeformten Tragegriffaufnahme (24) gelagert ist und das Tragen des Zentrifugenbechers (20) ohne Deckel (40) ermöglicht.

3. Zentrifugenbehälter nach Anspruch 1 oder 2, **dadurch gekennzeichnet, dass** der Tragegriff (30) lösbar in der Tragegriffaufnahme (24) gelagert ist, und eine Verlustsicherung vorgesehen ist, die ein Lösen des Tragegriffs (30) aus der Tragegriffaufnahme (24) ohne eingesetzten Deckel (40) in einer vertikalen Trageposition verhindert.

4. Zentrifugenbehälter nach Anspruch 3, **dadurch gekennzeichnet, dass** die Verlustsicherung in Form einer Ausnehmung (44) im Randbereich des Zentrifugenbechers (20) vorliegt, in welche ein Teil des Tragegriffs (30) in seiner Vertikalstellung in Eingriff steht, wodurch ein Lösen des Tragegriffs (30) aus der Tragegriffaufnahme (24) verhindert wird.

5. Zentrifugenbehälter (10) nach einem der vorangehenden Ansprüche, **dadurch gekennzeichnet, dass** der Tragegriff (30), von der Offenstellung über eine erste Verschlossenstellung in eine zweite Verschlossenstellung verschwenkbar ist.

6. Zentrifugenbehälter (10) nach einem der vorangehenden Ansprüche, **dadurch gekennzeichnet, dass** am Zentrifugenbecher (20) zwei gegenüberliegende Tragegriffaufnahmen (24) vorgesehen sind, mit welchen ein Tragegriff (30) mit je einem Ende verbindbar ist.

7. Zentrifugenbehälter (10) nach einem der vorangehenden Ansprüche, **dadurch gekennzeichnet, dass** die deckelseitigen Verbindungsmittel als Zapfen (42) ausgebildet sind.

8. Zentrifugenbehälter (10) nach Anspruch 7, **dadurch gekennzeichnet, dass** die tragegriffseitigen Verbindungsmittel Führungsbahnen (34) aufweisen, in welchen der Zapfen (42) geführt wird.

9. Zentrifugenbehälter (10) nach Anspruch 7, **dadurch gekennzeichnet, dass** der Tragegriff (30) an seinem Ende im eingebauten Zustand bezüglich des Zentrifugenbechers (20) nach außen gerichtete Befestigungsmittel (32) zur Verbindung mit der Tragegriffaufnahme (24) aufweist und nach Innen Verbindungsmittel zur Verbindung mit dem Deckel (40) aufweist.

10. Zentrifugenbehälter (10) nach einem der vorangehenden Ansprüche, **dadurch gekennzeichnet, dass** der Zentrifugenbecher (20) als Schwenkbecher ausgebildet ist und Aufnahmen (22) für die Verbindung mit einer Schwenkachse einer Zentrifuge vorgesehen sind, wobei die Tragegriffaufnahme (24) in einer Achse orthogonal zur Schwenkachse angeordnet sind.

## Claims

1. Centrifuge container (10) comprising a centrifuge bucket (20), a closure lever (30) and a lid (40), said lid (40) being capable of being secured to the centrifuge bucket (20) and said closure lever (30) being capable of being pivoted at least from an open position to a closed position thereof, and wherein the lid (40) and the centrifuge container (10) can be brought into mutual engagement through corresponding connection means (42) by means of the closure lever (30) so as to lock the lid (40) in a closed position of the latter and to release the lid in an open position of the latter, **characterized in that** the closure lever is designed as a carrying handle (30), and that said carrying handle (30) can be pivotally attached to at least one carrying lever receiving unit (24) integrally formed on the centrifuge bucket (20), and that, when the carrying handle (30) is in its closed position, the centrifuge bucket (10) can furthermore be safely carried using the carrying handle (30).

2. Centrifuge container according to claim 1, **characterized in that** the carrying handle (30) is mounted in the carrying handle receiving unit (24) integrally formed on the centrifuge bucket (20) and thus allows the centrifuge bucket (20) to be carried without the lid (40),

3. Centrifuge container according to one of claims 1 or 2, **characterized in that** the carrying handle (30) is detachably mounted in the carrying handle receiving unit (24) and that a loss-preventing means is provided which prevents the carrying handle (30) from becoming detached from the carrying handle receiving unit (24) without the lid in place (40) in a vertical carrying position.

4. Centrifuge container according to claim 3, **characterized in that** the loss-preventing means is provided in the form of a recess (44) in the peripheral region of the centrifuge bucket (20), which recess (44) is engaged by part of the carrying handle (30) in a vertical position of the latter, thus preventing the carrying handle (30) from being unintentionally released from the carrying handle receiving unit (24).

5. Centrifuge container (10) according to any one of the preceding claims, **characterized in that** the carrying handle (30) can be pivoted from its open position into a second closed position, via its first closed position.

6. Centrifuge container (10) according to any one of the preceding claims, **characterized in that** two carrying handle receiving units (24) which are arranged opposite each other are provided on the centrifuge bucket (20), and either end of the carrying handle (30) can each be connected to one of said units (24).

7. Centrifuge container (10) according to any one of the preceding claims, **characterized in that** the connecting means provided on the lid are designed as pins (42).

8. Centrifuge container (10) according to claim 7, **characterized in that** the connecting means on the carrying handle include guideways (34) in which the pin (42) is guided.

9. Centrifuge container (10) according to claim 7, **characterized in that**, in the mounted state of the carrying handle (30), each end of the carrying handle (30) has attachment means (32), which face outward with respect to the centrifuge bucket (20), for connection to the carrying handle receiving unit (24), and the inner side of the carrying handle (30) has connection means for connection to the lid (40).

10. Centrifuge container (10) according to any one of the preceding claims, **characterized in that** the centrifuge bucket (20) is designed as a swinging bucket and that receiving means (22) are provided for connection to a pivot axis of a centrifuge, with the carrying handle receiving units (24) being disposed in an axis which is orthogonal to said pivot axis.

## Revendications

1. Centrifugeuse (10) comprenant une cuve (20), un levier de verrouillage (30) et un couvercle (40) qui peut être fixé sur la cuve (20) et le levier de verrouillage (30) est pivotant au moins depuis une position d'ouverture vers une position de verrouillage, et le couvercle (40) et la centrifugeuse (10) peuvent être mis en prise par le levier de verrouillage (30) à l'aide de moyens de connexion (42) correspondants, de manière à bloquer le couvercle (40) en position de verrouillage et à le débloquer en position d'ouverture, **caractérisée en ce que** le levier de verrouillage est conçu comme poignée de transport (30), et la poignée de transport (30) peut être fixée de manière pivotante sur au moins un logement (24) de poignée formé sur la cuve (20), et en outre la poignée de transport (30) permet de porter la centrifugeuse (10) par la poignée de transport (30) en position de verrouillage.

2. Centrifugeuse selon la revendication 1, **caractérisée en ce que** la poignée de transport (30) est montée sur le logement (24) de poignée formé sur la cuve (20) et permet le transport de la cuve (20) sans couvercle (40).

3. Centrifugeuse selon la revendication 1 ou 2, **caractérisée en ce que** la poignée de transport (30) est montée de manière amovible dans le logement (24) de poignée, et une sécurité anti-perte est prévue, laquelle empêche une libération de la poignée de transport (30) hors du logement (24) de poignée, dans une position de transport verticale sans couvercle (40).

4. Centrifugeuse selon la revendication 3, **caractérisée en ce que** la sécurité anti-perte se présente sous la forme d'un évidement (44) dans la zone de bord de la cuve (20) dans laquelle une partie de la poignée de transport (30) est en prise dans sa position verticale, ce qui empêche une libération de la poignée de transport (30) hors du logement (24) de poignée.

5. Centrifugeuse (10) selon l'une des revendications précédentes, **caractérisée en ce que** la poignée de transport (30) est pivotante de la position d'ouverture vers une deuxième position de verrouillage en passant par une première position de verrouillage.

6. Centrifugeuse (10) selon l'une des revendications précédentes, **caractérisée en ce que** deux logements (24) de poignée opposés sont prévus contre la cuve (20), auxquels une poignée de transport (30) peut être raccordée par chacune de ses extrémités.

7. Centrifugeuse (10) selon l'une des revendications précédentes, **caractérisée en ce que** les moyens de connexion côté couvercle sont réalisés sous forme de tenons (42).

8. Centrifugeuse (10) selon la revendication 7, **caractérisée en ce que** les moyens de connexion côté poignée de transport présentent des glissières (34) de guidage dans lesquelles le tenon (42) est guidé.

9. Centrifugeuse (10) selon la revendication 7, **caractérisée en ce que** la poignée de transport (30) présente à son extrémité en état de montage des moyens de fixation (32) dirigés vers l'extérieur par rapport à la cuve (20) pour la connexion avec le logement (24) de poignée et des moyens de connexion dirigés vers l'intérieur pour la connexion avec le couvercle (40).

10. Centrifugeuse (10) selon l'une des revendications précédentes, **caractérisée en ce que** la cuve (20) est réalisée comme cuve pivotante et des réceptions (22) sont prévues pour la connexion avec un axe de pivotement d'une centrifugeuse, dans laquelle les logements (24) de poignée sont situés sur un axe orthogonal à l'axe de pivotement.
